# EUROPEAN PATENT APPLICATION

(11) **EP 4 576 717 A1**
(43) Date of publication of application: **25.06.2025**
(21) Application number: 24206369.1
(22) Date of filing: 14.10.2024
(51) Int. Cl.: H04L 45/24, H04L 45/748, H04L 45/125, H04L 47/122, H04L 47/125

(54) **A MULTI-PATH ARCHITECTURE FOR HARDWARE OFFLOADING**

(30) Priority: 21.12.2023 US 202318392214
(71) Applicant: Lemon Inc., Grand Cayman, KY1-1205 (KY)
(72) Inventor: SUN, Yan, Los Angeles, California 90066 (US)
(74) Representative: Dentons UK and Middle East LLP

(57) **Abstract**

A method for multi-path data transferring in a computer network is provided. The method includes establishing (510) multiple paths in a connection by assigning a plurality of source ports and fixing a source Internet Protocol (IP) address, a destination IP address, and a destination port. The method also includes detecting (520) at least one of a first congestion level and a first bandwidth of each path of the multiple paths, and partitioning (530) a first data into multiple chunks. A number of the multiple chunks of the first data corresponds to a number of the multiple paths. A size of each chunk of the multiple chunks of the first data is determined based on the detected at least one of the first congestion level and the first bandwidth of each path of the multiple paths. The method further includes respectively transferring (540) the multiple chunks of the first data via the multiple paths.

## Description

### FIELD

The embodiments described herein pertain generally to a multiple-path architecture in a computer network system. More specifically, the embodiments described herein pertain to methods and systems for a multiple-path architecture to achieve end-side unawareness of the multiple-path in a computer network system for data center(s) and/or cloud.

### BACKGROUND

Computer network performance requirements bring forward ongoing challenges to computer network architectures, especially in computer applications including data center(s) and/or cloud. Existing solutions such as multi-path per network connection have been proposed to improve computer network performance. However, the improvement of the computer network performance using existing solutions is limited, especially in the network hardware due to the out-of-order delivery issue in the multiple paths for the same network connection.

Equal-cost multi-path routing (ECMP) or other techniques are used in some multi-path solutions. In some existing solutions, the multi-paths share the same network hardware resource, such as an output queue, but the hardware resource may not have the detailed information for each path, especially the path quality and congestion level, which make the network congestion control and load balancing between different paths very difficult. Even with the adaptive routing switches, which may select preferred paths and split the data flows, the network endpoint still has little knowledge about the paths, which makes the network congestion control and load balancing difficult to make decisions regarding the paths. In other existing solutions, network hardware may treat each path separately. However, data may arrive out-of-order from different paths, which makes it difficult for network hardware to reorder the received data from the multiple paths.

### SUMMARY

It is to be understood that some computer network hardware (e.g., the network interface card and/or its field programmable gate array, etc.) may have a relatively small buffer for receiving data. When using traditional multi-path mechanisms, because of the load balancing (to balance data packets load for different paths) using e.g., round robin or other protocol(s), the transfer speed of each path may be different (e.g., some may be faster, while others may be slower). When the data packets (of the data to be transferred) reach the destination, the data packets may be out of order, and the data packets need to be stored in the hardware buffer and re-ordered. Since the hardware buffer may be small, many data packets may be discarded (which causes re-send, and may slow down the transfer speed). Features in the embodiments disclosed herein may increase the bandwidth and reduce or prevent long tail latency, by e.g., providing different source ports to the data packets.

Features in the embodiments disclosed herein may provide protocol(s)/algorithm(s) to establish multiple paths within a connection, by e.g., fixing the source and destination Internet Protocol (IP) addresses and/or the destination port, and changing the source port(s). In such embodiments, a path between a client (e.g., a client application, a client computer, a client device, etc.) and a server (e.g., a server application, a server computer, a server device, etc.) may be defined by a 4-tuple including the source and destination IP addresses and the source and destination ports. Each time the value of the source port is changed (to a new value), a different or new path may be established/used/selected. It is to be understood that computer network multi-path transport protocol may employ multiple network paths for a single connection or link. Multi-path protocol may have benefit of "pooling" the network bandwidth, which may achieve high throughput and high availability time for the network.

It is also to be understood that technologies such as Receive Side Scaling (RSS) on the Network Interface Card (NIC) may be used to set the number of data queues (e.g., receiving queue, etc.) and the number of cores (e.g., processors, controllers, etc.) that may process the data traffic. RSS may select the receive queue of a data packet based on e.g., the hashing result (based on ECMP protocol/algorithm, etc.) computed on the 5-tuple (including the source and destination IP addresses, the source and destination ports, and the protocol) of the packet header. In such way, the data traffic may be evenly spread across the queues (and the cores). It is further to be understood that each network switch may use a routing protocol to provide e.g., ECMP forwarding, where based on a hashing of the 5-tuple in each packet, data flows may be split across multiple paths. When a packet is lost or timeout, the original path for the packet may be considered as heavily congested or link-down, and the packet needs to be sent again on a different path.

Features in the embodiments disclosed herein may increase throughput bandwidth, reduce long-tail latency and jitter, and enhance reliability, mitigating the impact of congestion and link failures. Features in the embodiments disclosed herein may also achieve the multiple path per connection for data transferring without degrading the performance of other traffic (e.g., Transmission Control Protocol (TCP) traffic, etc.). Features in the embodiments disclosed herein may avoid, prevent, or reduce excessive resource consumption, such as hardware resources (e.g., the hardware resources of the NIC, such as the Field Programmable Gate Array (FPGA) of the NIC, etc.). Features in the embodiments disclosed herein may also address the out-of-order delivery issues caused by multiple paths. It is to be understood that in multi-path protocol(s) or algorithm(s), too few paths may affect throughput, while too many paths may increase packet loss, leading to increased long-tail latency. Features in the embodiments disclosed herein may provide a balanced/high-quality multi-path protocol and/or algorithm with e.g., dynamic adjustments to establish the multiple paths.

In one example embodiment, a method for multi-path data transferring in a computer network is provided. The method includes establishing multiple paths in a connection by assigning/changing a plurality of source ports and fixing a source Internet Protocol (IP) address, a destination IP address, and/or a destination port. The method also includes detecting at least one of a first congestion level and a first bandwidth of each path of the multiple paths, and partitioning a first data into multiple chunks. A number of the multiple chunks of the first data corresponds to a number of the multiple paths. A size of each chunk of the multiple chunks of the first data is determined based on the detected at least one of the first congestion level and the first bandwidth of each path of the multiple paths. The method further includes respectively transferring the multiple chunks of the first data via the multiple paths.

In another example embodiment, a computer network system for multi-path data transferring is provided. The system includes a processor and a memory to store a first data. The processor is to establish multiple paths in a connection by assigning/changing a plurality of source ports and fixing a source Internet Protocol (IP) address, a destination IP address, and/or a destination port. The processor is also to detect at least one of a first congestion level and a first bandwidth of each path of the multiple paths, and partition the first data into multiple chunks. A number of the multiple chunks of the first data corresponds to a number of the multiple paths. A size of each chunk of the multiple chunks of the first data is determined based on the detected at least one of the first congestion level and the first bandwidth of each path of the multiple paths. The processor is to further respectively transfer the multiple chunks of the first data via the multiple paths.

In yet another example embodiment, a non-transitory computer-readable medium having computer-executable instructions stored thereon is provided. The instructions, upon execution, cause one or more processors to perform operations including establishing multiple paths in a connection by assigning/changing a plurality of source ports and fixing a source Internet Protocol (IP) address, a destination IP address, and/or a destination port. The operations also includes detecting at least one of a first congestion level and a first bandwidth of each path of the multiple paths, and partitioning a first data into multiple chunks. A number of the multiple chunks of the first data corresponds to a number of the multiple paths. A size of each chunk of the multiple chunks of the first data is determined based on the detected at least one of the first congestion level and the first bandwidth of each path of the multiple paths. The operations further includes respectively transferring the multiple chunks of the first data via the multiple paths.

### BRIEF DESCRIPTION OF THE DRAWINGS

The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another, and vice versa. Non-limiting and non-exhaustive descriptions are described with reference to the following drawings. The components in the figures are not necessarily to scale, emphasis instead being placed upon illustrating principles. In the detailed description that follows, embodiments are described as illustrations only since various changes and modifications may become apparent to those skilled in the art from the following detailed description.
FIG. 1 is a schematic view of an example computer network system for multi-path data transferring, arranged in accordance with at least some embodiments described herein.
FIG. 2 is a schematic view of an example multi-path architecture in a computer network system, arranged in accordance with at least some embodiments described herein.
FIG. 3A is a schematic view of an example data chunk partitioning for a multi-path architecture, arranged in accordance with at least some embodiments described herein.
FIG. 3B illustrates an example data chunk partitioning for a multi-path architecture, arranged in accordance with at least some embodiments described herein.
FIG. 4 is a schematic view of an example transferring data chunks using a multi-path architecture, arranged in accordance with at least some embodiments described herein.
FIG. 5 is a flow chart illustrating an example processing flow of multi-path data transferring in a computer network system, in accordance with at least some embodiments described herein.
FIG. 6 is a schematic structural diagram of an example computer system applicable to implementing a device, arranged in accordance with at least some embodiments described herein.

### DETAILED DESCRIPTION

In the following detailed description, particular embodiments of the present disclosure are described herein with reference to the accompanying drawings, which form a part of the description. In this description, as well as in the drawings, like-referenced numbers represent elements that may perform the same, similar, or equivalent functions, unless context dictates otherwise. Furthermore, unless otherwise noted, the description of each successive drawing may reference features from one or more of the previous drawings to provide clearer context and a more substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described herein and illustrated in the drawings, may be arranged, substituted, combined, separated, and designed in a wide variety of different configurations, all of which are explicitly contemplated herein.

It is to be understood that the disclosed embodiments are merely examples of the disclosure, which may be embodied in various forms. Well-known functions or constructions are not described in detail to avoid obscuring the present disclosure in unnecessary detail. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Additionally, the present disclosure may be described herein in terms of functional block components and various processing steps. It should be appreciated that such functional blocks may be realized by any number of hardware and/or software components configured to perform the specified functions.

The scope of the disclosure should be determined by the appended claims and their legal equivalents, rather than by the examples given herein. For example, the steps recited in any method claims may be executed in any order and are not limited to the order presented in the claims. Moreover, no element is essential to the practice of the disclosure unless specifically described herein as "critical" or "essential".

As referenced herein, a "network" or a "computer network" is a term of art and may refer to interconnected computing devices that may exchange data and share resources with each other. It is to be understood that the networked devices may use a system of rules (e.g., communications protocols, etc.), to transmit information over wired or wireless technologies.

As referenced herein, a "packet", "data packet", "network packet", or "network data packet" in a computer network system is a term of art and may refer to a formatted unit of data carried by a computer network system. It is to be understood that a packet may include control information and user data. User data may refer to the "payload". Control information may provide information for delivering the payload (e.g., source and destination network addresses, error detection codes, sequencing information, etc.). It is also to be understood that control information typically may be stored in packet headers and/or trailers. It is further to be understood that control information may include metadata. Metadata in computer networking may refer to descriptive information about the user data, or "data about the data." Metadata may carry individual traits pertaining to the structure of communications protocols and the packets.

As referenced herein, a "header" of a packet may refer to an initial portion of the packet. It is to be understood that a header may contain control information such as addressing, routing, protocol version, etc. The format of the header information may depend on the communications protocol being used. For example, in the Open Systems Interconnection (OSI) model (the model used in the embodiments disclosed herein) from the International Organization for Standardization (ISO), the communications in a computer networking system may be split into different layers: a physical layer (L1), a data link layer (L2), a network layer (L3), a transport layer (L4), a session layer (L5), a presentation layer (L6), and an application layer (L7). In another example, the Transmission Control Protocol/Internet Protocol (TCP/IP) model may include a physical layer (L1), a data link layer (L2), an Internet layer (L3), a transport layer (L4), and an application layer (L5). Each layer may have its own communications protocol. For example, an L2 header may contain fields such as destination media access control (MAC) address, source MAC address, etc.

As referenced herein, a "connection" or a "link" in a computer network system is a term of art and may refer to communication facilities between e.g., two nodes, applications, computers, devices, etc. For example, when a client application sends data to a server application over the Internet, the transport layer protocol (e.g., TCP, user datagram protocol (UDP), etc.) may be used to establish a connection between the client and server, and to transmit the data packets between the client and the server. The transport layer may provide communication between application processes running on different hosts (e.g., a server, a client, etc.) within a layered architecture of protocols and other network components. That is, the transport layer may collect message segments from applications, and transmits them into the network (e.g., Layer 3, etc.).

As referenced herein, "congestion control" in a computer network system is a term of art and may refer to a mechanism (e.g., a software/hardware module, algorithm, engine, etc.) that controls the entry of data packets into the network, enabling a better use of a shared network infrastructure and avoiding congestive collapse. For example, TCP may use a congestion control algorithm that includes various aspects of an additive increase/multiplicative decrease scheme, slow start, and/or congestion window (CWND), etc. to achieve congestion avoidance.

As referenced herein, a "gateway" or a "network gateway" in a computer network system is a term of art and may refer to a device that connects disparate networks by translating communications from one communication protocol to another. A gateway may provide a connection between two networks, and the networks do not need to use the same network communication protocol. It is to be understood that gateways may serve as an entry and exit point for a network as all data must pass through or communicate with the gateway prior to being routed.

As referenced herein, "traffic", "traffic flow", or "network flow" in a computer network system may refer to data (e.g., a sequence of packets, etc.) from a source computer or device to a destination computer or device, which may be another host, a multicast group, or a broadcast domain. It is to be understood that a traffic may include all packets in a specific transport connection and/or a media stream, and may include a set of packets passing an observation point in the network during a certain time interval.

As referenced herein, a "load balancing" in a computer network system is a term of art and may refer to a process of distributing a set of tasks over a set of resources (e.g., computing units, etc.), with the aim of making their overall processing more efficient. Load balancing may optimize the response time and avoid unevenly overloading some compute nodes while other compute nodes are left idle. A "load balancer" may refer to a computer device or program configured to perform the process of load balancing.

As referenced herein, an "NIC" or "network interface card" in a computer network system is a term of art and may refer to a computer hardware component that connects a computer to a computer network. It is to be understood that some NICs may offer integrated field-programmable gate arrays (FPGAs) for user-programmable processing of network traffic before it reaches the host computer, allowing for significantly reduced latencies in time-sensitive workloads.

As referenced herein, "equal-cost multipath" or "ECMP" in a computer network system is a term of art and may refer to a network routing algorithm or protocol that allows for traffic of the same session, or flow (e.g., traffic with the same source and destination) to be transmitted across multiple paths of equal cost.

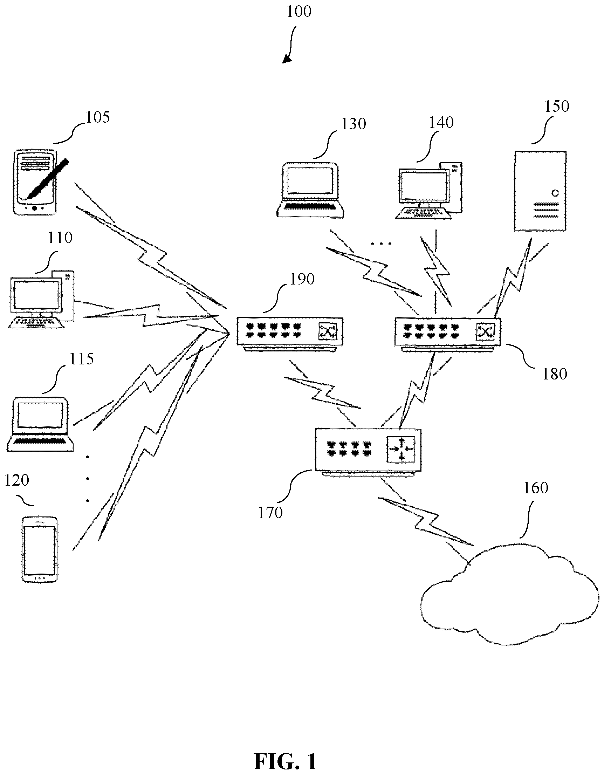

FIG. 1 is a schematic view of an example computer network system 100 for multi-path data transferring, arranged in accordance with at least some embodiments described herein.

The system 100 may include devices 105, 110, 115, 120, 130, 140, 150, a network 160, a gateway or router 170, and/or network switches 180 and 190. It is to be understood that FIG. 1 only shows illustrative numbers of the devices (105, 110, 115, 120, 130, 140, 150, 170, 180, and/or 190) and/or the network. The embodiments described herein are not limited to the number and the location/connection of the devices and/or the network described. That is, the number and the location/connection of devices and/or networks described herein are provided for descriptive purposes only and are not intended to be limiting.

In accordance with at least some example embodiments, the devices 105, 110, 115, 120, 130, 140, and/or 150 may be various electronic devices. The various electronic devices may include but not be limited to a mobile device such as a smartphone, a tablet computer, an e-book reader, a laptop computer, a desktop computer, a server, and/or any other suitable electronic devices.

In accordance with at least some example embodiments, the network 160 may be a medium used to provide a communications link among the devices 105, 110, 115, 120, 130, 140, 150, 170, 180, and/or 190. The network 160 may be the Internet, a local area network (LAN), a wide area network (WAN), a local interconnect network (LIN), a cloud, etc. The network 160 may be implemented by various types of connections, such as a wired communications link, a wireless communications link, an optical fiber cable, etc.

In accordance with at least some example embodiments, one or more of the devices 105, 110, 115, 120, 130, 140, and/or 150 may be a server for providing various services to users using one or more of other devices. The server may be implemented by a distributed server cluster including multiple servers or may be implemented by a single server.

A user may use one or more of the devices 105, 110, 115, 120, 130, 140, 150, 170, 180, and/or 190 to interact with each other via the network 160. Various applications or localized interfaces thereof, such as social media applications, online shopping services, machine learning services, data center services, high performance computing services, artificial intelligent services, cloud services, or the like, may be installed on the devices 105, 110, 115, 120, 130, 140, and/or 150.

It is to be understood that software applications or services according to the embodiments described herein and/or according to the services provided by the service providers may be performed by the devices 105, 110, 115, 120, 130, 140, 150, 170, 180, and/or 190. Accordingly, the apparatus for the software applications and/or services may be arranged in the devices 105, 110, 115, 120, 130, 140, 150, 170, 180, and/or 190.

It is also to be understood that when a service is not performed remotely, the system 100 may not include the network 160, but include only the device 105, 110, 115, 120, 130, 140, 150, 170, 180, and/or 190.

It is further to be understood that the devices 105, 110, 115, 120, 130, 140, 150, 170, 180, and/or 190 may each include one or more processors, a memory, and a storage device storing one or more programs. The devices 105, 110, 115, 120, 130, 140, 150, 170, 180, and/or 190 may also each include an Ethernet connector, a wireless fidelity receptor, etc. The one or more programs, when being executed by the one or more processors, may cause the one or more processors to perform the method(s) described in any embodiments described herein. Also, it is to be understood that a computer readable non-volatile medium may be provided according to the embodiments described herein. The computer readable medium stores computer programs. The computer programs are used to, when being executed by a processor, perform the method(s) described in any embodiments described herein.

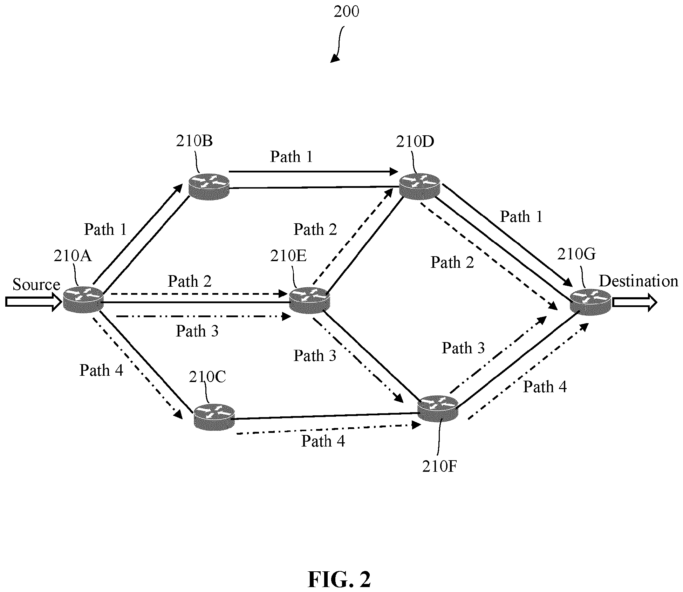

FIG. 2 is a schematic view of an example multi-path architecture 200 in a computer network system, arranged in accordance with at least some embodiments described herein.

As shown in FIG. 2, data may be transferred between the Source and the Destination. The Source and/or the Destination may be an application, computer, device, network node, client, server, etc. A connection or link may be created, generated, or established between the Source and the Destination. The connection or link may have multiple path (Path 1, Path 2, Path 3, Path 4, etc.). On the connection or link, there may be multiple network nodes (e.g., router, switch, gateway, relay, computer, device, etc.) 210A, 210B, 210C, 210D, 210E, 210F, 210G, etc. It is to be understood that the number and the route of the multiple paths and the number of the network nodes described herein are provided for descriptive purposes only and are not intended to be limiting.

It is to be understood that multiple paths (e.g., of a connection or link) may be probed and established (e.g., by the multi-path algorithm or protocol described herein) during connection/link creation, with several paths simultaneously transmitting data for a single connection/link. If one or more paths encounter serious issues (heavily congested, failed, disconnected, etc.), data transmission on such path(s) may switch to other available paths. If the problematic path(s) cannot recover within a predetermined period of time, the path may be deleted, and a new available path may be probed.

It is to also be understood that the multi-path algorithm or protocol described herein may solve or address the network-side (the network between the Source and the Destination) issues without burdening the end side (e.g., the Source and/or the Destination). That is, the implementation of the multi-path algorithm or protocol described herein may make the end side unaware of (or minimize the awareness of) the network-side issues, the end side including applications and underlying hardware such as NICs/FPGAs.

In an example embodiment, the multi-path algorithm or protocol implementation may be achieved by adjusting, changing, or selecting the source port. It is to be understood that a path between the Source and the Destination may be defined by a 4-tuple (the source and destination IP addresses and the source and destination ports) e.g., for the data to be transferred. An IP address pair (the source IP address and the destination IP address) may define multiple connections/links. Each connection/link may correspond to a queue pair (QP, e.g., a point to point connection), and each connection/link may have multiple paths. It is to be understood that QP(s) may contain a send queue and a receive queue. The send queue may send outbound messages requesting for operations such as the Remote Direct Memory Access (RDMA) operations, the Remote Procedure Call (RPC) operations, etc. The receive queue may receive incoming messages or immediate data.

In an example embodiment, for a given IP address pair (e.g., the source IP address and the destination IP address are given/fixed), the destination port (or the listening port) may be fixed and/or unique. For example, the value of the destination port may be fixed as/to 8888. Under such configuration, a predetermined number of source ports (i.e., the number of paths) may be reserved for each connection (e.g., having a fixed destination port for a given IP address pair). For example, 8 source ports may be reserved for each connection. That is, each connection may have 8 paths, and each source port may represent a path (of the 8 paths).

In an example embodiment, to ensure end-side unawareness (of the network-side issues), a predetermined source port prefix may be used. For example, a value of a source port (or a destination port) for an application's connection may be a 16-bit binary value (e.g., 8892 in decimal, or 0010_0010_1011_1100 in binary). A predetermined source port prefix (e.g., 12-bit binary value 0010_0010_1011 in the 16-bit binary value of the source port) may be used to determine the number of source ports (and thus the number of paths) for a connection/link. In such case, the last 4 bits (XXXX) of a source port may represent a total of 16 different source ports (e.g., 0010_0010_1011_XXXX in binary) that belong to a same source port prefix (e.g., 0010_0010_1011 in binary). That is, the source port (e.g., 8892 in decimal, or 0010_0010_1011_1100 in binary) and other 15 source ports belong to the same source port prefix (e.g., the 12-bit binary value 0010_0010_1011). It is to be understood that in this case, the number of source ports (16, which may correspond to the same number of paths) is the upper limit/boundary for the same source port prefix. For example, allocating four paths for each connection may be formed by using four consecutive source ports belonging to the same prefix. It is also to be understood that by using different size of source port prefix (e.g., 14-bit, 10-bit, etc.), more or less number of source ports (that belong to a same prefix) and the corresponding number of multiple paths may be determined.

Back to FIG. 2, for the data to be transferred on a connection/link (e.g., a given IP address pair with a fixed destination port) between the Source and Destination, 4 different source ports (with a same source port prefix) may be used (e.g., for the data chunks or data packets), which may establish 4 different paths to e.g., simultaneously transfer the data chunks or data packets of the data to be transferred.

It is to be understood that by adjusting, changing, or selecting different source ports (with a same source port prefix) to establish different paths, only one rule or policy may be needed in the hardware (e.g., NIC, FPGA, etc.) to handle all the established different paths (for the same source port prefix). Features in the embodiments disclosed herein may simplify the policy of the hardware, since there is no need for a policy for a port. Instead, a policy for a link/connection may work well. It is also to be understood that if one path is heavily congested or the communication on the path is down, the corresponding source port (for such path) may be switched e.g., to an unused source port belonging to the same source port prefix to switch to a different path. It is further to be understood that network policy is a collection of rules that govern the behaviors of network devices. If the multi-path algorithm/protocol is implemented in software, a single rule may be issued in the NIC to handle the different paths (corresponding to different source ports with a same source port prefix) in a same way. If the multi-path algorithm/protocol is implemented in hardware (e.g., NIC or FPGA of the NIC, etc.), queue pairs (QPs) in the FPGA may also use a similar prefix representation for a single QP's source port, which may ensure that multipath does not reduce the total number of connections when the total number of QPs remains constant.

In an example embodiment, regarding the application-side source port selection, to support different connections/links between the same IP address pair(s), different source port prefixes may be used. Since the source ports within the same prefix represent the same connection/link, one connection/link may use 0010_0010_1011_XXXX (in binary), while another connection/link uses 0010_0010_1100_XXXX (in binary). It is to be understood that different IP address pairs may use the same source port prefix to account for the issue of excessive source port consumption.

It is also to be understood that in the multi-path algorithm/protocol, each connection/link corresponds to one QP (queue pair), and the hardware (e.g., the NIC, the FPGA in NIC, etc.) may be unaware of the existence of the multiple paths. When a sending path becomes unusable (e.g., due to communication timeout, severe congestion, etc.), the path may be deactivated. Data is then switched to use another path by modifying the last predetermined number of digits of the source port (e.g., if the source port prefix is 12-bit in binary, then the last predetermined number of digits may be the last 4-bit in binary because the value of a source port is 16-bit in binary), and the round-trip time (RTT) probes may be sent periodically (or continuously) to detect the communication characteristics of the path. When the path recovers, the path may be reactivated by switching the source port back to the one corresponding to the path.

It is further to be understood that in the multi-path algorithm/protocol, multi-path transmission may be controlled and implemented in software, with hardware being unaware of the multi-path. Each path in the software may have its own sliding window (e.g., CWND, etc.) independent to other paths', calculated and updated by the software, and the software load balancer may decide which path to use for data packet transmission by setting the last predetermined digits of the source port. The sum of sliding window sizes for all paths may be sent to the hardware (e.g., NIC or its FPGA's corresponding QP), which may allow the hardware to reflect the total available bandwidth for all paths of a corresponding connection/link. The hardware may support the full number of connections/links without reduction due to the multiple paths.

It is to be understood that in the multi-path algorithm/protocol, the internal order of the messages (e.g., of the data to be transferred) may be preserved, but the order between messages may not be required. As such, the load balancer schedules may be based on messages, ensuring that a message is transmitted only through one path. It is also to be understood that in the multi-path algorithm/protocol, each path may have its own congestion control, which is independent to the congestion control of other paths. The congestion control may be software-driven and/or hardware-assisted congestion control.

In an example embodiment, a primary-backup path algorithm/protocol may be implemented. That is, a connection/link may have two effective paths, namely the primary path and the backup path. Only the primary path may transmit control messages and data packets, while the backup path may transmit messages such as RTT, keep-alive messages, etc. When the primary path experiences severe congestion or packet loss, the primary-backup path algorithm/protocol may check the latest RTT results of the backup path or immediately sends an RTT message. If the RTT result indicates that the backup path is more desirable than the primary path (e.g., has less RTT and a difference between the RTTs of the paths is greater than a threshold, etc.), a path (via changing the source port) switch (from the primary path to the backup path) may occur. After a predetermined time interval, if the newly switched path meets predetermined requirements, the backup path may be marked as the (new) primary path. If the original (primary) path has not recovered, a new backup path may be probed for replacement of the original (primary) path. If the original (primary) path has returned to normal, the original (primary) path may be marked as the (new) backup path.

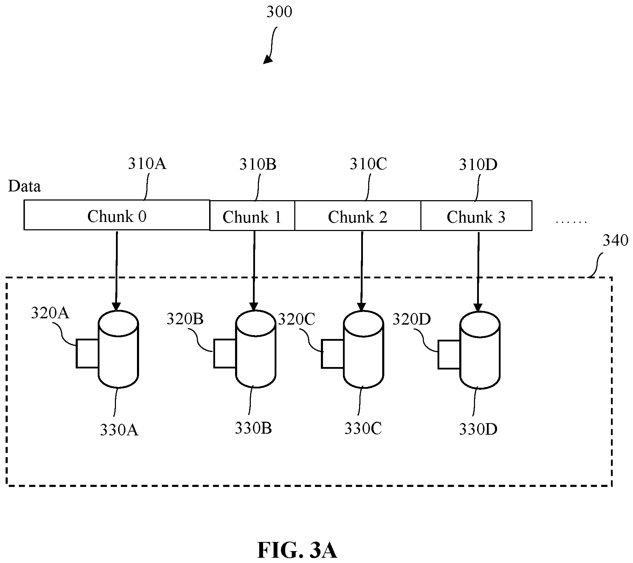

FIG. 3A is a schematic view of an example data chunk partitioning 300 for a multi-path architecture, arranged in accordance with at least some embodiments described herein.

In an example embodiment, in the multi-path algorithm/protocol, the data sender (e.g., the Source of FIG. 2, etc.) may divide the data to be transmitted (or a portion of the data) into a plurality of pieces (e.g., continuous pieces such as data chunks), each transmitted through a different path. It is to be understood that the sizes of the chunks may be determined based on each path's communication characteristics (e.g., speed, bandwidth, congestion window, etc.), in order to complete the transmissions through the multiple paths at (substantially) the same time. Each chunk may be transformed into a separate work request, ensuring internal sequencing within the chunk. Sequencing between chunks may not be necessary. The receiving end may forward the data chunk(s) to e.g., the application layer API (application programming interface) based on the chunk addresses, leaving the sequencing issue to be resolved by the application layer. The load balancer may determine the chunk size and select the path based on information such as the number of available paths, bandwidth latency, etc.

As shown in FIG. 3A, after the multiple paths (330A, 330B, 330B, 330B, etc.) have been established (e.g., as described in the description of FIG. 2) for a connection/link, the sender (e.g., the Source of FIG. 2) may monitor, check, probe, and/or poll each path's communication characteristics (e.g., speed, bandwidth, congestion window, etc.) by using various congestion control mechanisms such as sending the RTT messages and checking the RTT results, etc. It is to be understood that each path may have its own congestion control module (320A, 320B, 320C, 320D, etc.) independent to the congestion control module of other path(s).

In an example embodiment, based on the (predetermined) number of source ports (with a same predetermined source port prefix) to be used, the number of the available multiple paths may be determined. The sender may first optionally monitor, check, probe, and/or poll each path's communication characteristics (e.g., speed, bandwidth, congestion window, etc.), to determine whether the available multiple paths can be used. It is to be understood that when the path is heavily congested or failed (e.g., the RTT result is greater than a predetermined threshold, etc.), the path is considered as not usable, and a different path may be checked and/or used. When the path is not heavily congested or failed (e.g., the RTT result is equal to or less than the predetermined threshold, etc.), the path is considered as usable. It is also to be understood that if the sender does not first optionally monitor, check, probe, and/or poll each path's communication characteristics (e.g., speed, bandwidth, congestion window, etc.), all available paths may be considered as equally usable (i.e., usable and having the same communication characteristics).

In an example embodiment, based on the number of usable paths and each usable path's communication characteristics (e.g., speed, bandwidth, congestion window, etc.), the sender may divide or partition a first portion (e.g., 10%, 30%, 50%, 100%, etc.) of the data to be transferred into a plurality of pieces (e.g., data chunks 310A, 3 10B, 3 10C, 3 10D, etc.). The sizes of the data chunks may be determined based on, e.g., the communication characteristics of each usable path in order to complete the transmissions of the chunks (of the first portion of the data to be transferred) through the multiple usable paths at (substantially) the same time.

It is to be understood that the data to be transferred may include one, two or more portions, depending on the size of the data to be transferred. When the data chunks (3 10A, 310B, 310C, 310D, etc.) of the first portion of the data to be transferred is transmitting via the usable paths, the sender may periodically or continuously monitor, check, probe, and/or poll each path's communication characteristics (e.g., speed, bandwidth, congestion window, etc.), e.g., by using each path's congestion control module (320A, 320B, 320C, 320D, etc.). When or before the first portion of the data to be transferred finishes transmitting (e.g., when a first data chunk finishes transmitting), the sender may divide or partition a second portion of the data to be transferred into a plurality of pieces (e.g., data chunks). The sizes of the data chunks may be determined based on, e.g., the communication characteristics (obtained during the transmission of the first portion of the data to be transferred) of each usable path (and/or the completion time of transmission of data chunks of previous data portion, if any) in order to complete the transmissions of the chunks (of the second portion of the data to be transferred) through the multiple usable paths at (substantially) the same time. The same processes as those of the second portion may be repeated until all portions of data to be transferred finish transmitting.

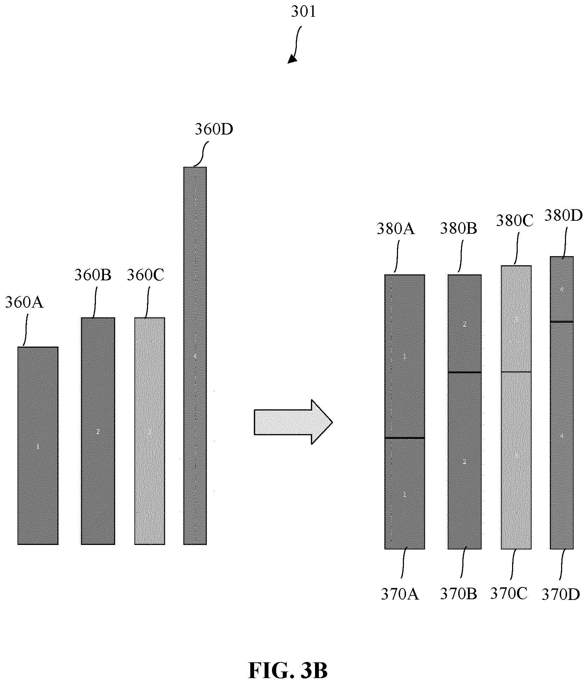

In an example embodiment, box 340 of FIG. 3 may be queues (e.g., sending queues), and each of the 330A, 330B, 330B, 330B, etc. may be the queue for the corresponding usable path. Each usable path's congestion control module (320A, 320B, 320C, 320D, etc.) may have its own controller or processor or engine, and may monitor, check, probe, poll, determine, and/or control each path's communication characteristics (e.g., to determine congestion, etc.) independently and send the results back to the sender (e.g., per the sender's request).

FIG. 3B illustrates an example data chunk partitioning 301 for a multi-path architecture, arranged in accordance with at least some embodiments described herein.

As shown in the left side of FIG. 3B, the data to be transferred may be divided or partitioned into a number of data chunks (360A, 360B, 360C, 360D, etc.), e.g., based on the number of available or usable paths (e.g., as established per the description of FIG. 2). In an example embodiment, the sizes of the data chunks (360A, 360B, 360C, 360D, etc.) may be determined based on, e.g., the communication characteristics of each available or usable path in order to complete the transmissions of the chunks through the multiple usable paths at (substantially) the same time. During the transmission of the data chunks (360A, 360B, 360C, 360D, etc.), the communication characteristics of the path(s) may be changed, and the completion time (i.e., the height of each chunk) might be different due to e.g., different bandwidth (i.e., the width of each chunk) or congestion situation of the path(s). In another example embodiment, if the communication characteristics of each available or usable path are not available (e.g., since the optional checking of the communication characteristics is not performed, etc.), the sizes of the data chunks (360A, 360B, 360C, 360D, etc.) may be predetermined (e.g., a same size for each chunk). During the transmission of the data chunks (360A, 360B, 360C, 360D, etc.), the communication characteristics of the path(s) may be discovered/obtained/available, and the completion time (i.e., the height of each chunk) might be different due to e.g., different bandwidth (i.e., the width of each chunk) or congestion situation of the path(s).

As shown in the right side of FIG. 3B (an improved division or partition of the data chunks compared to the left side of FIG. 3B), a first portion of the data to be transferred may be divided or partitioned into a number of data chunks (370A, 370B, 370C, 370D, etc.), e.g., based on the number of available or usable paths (e.g., as established per the description of FIG. 2). In an example embodiment, the sizes of the data chunks (370A, 370B, 370C, 370D, etc.) may be determined based on, e.g., the communication characteristics of each available or usable path in order to complete the transmissions of the chunks through the multiple usable paths at (substantially) the same time. In another example embodiment, if the communication characteristics of each available or usable path are not available (e.g., since the optional checking of the communication characteristics is not performed, etc.), the sizes of the data chunks (370A, 370B, 370C, 370D, etc.) may be predetermined (e.g., a same size for each chunk).

During the transmission of the data chunks (370A, 370B, 370C, 370D, etc.), the communication characteristics of the path(s) may be changed (or obtained if not previously available), and the completion time (i.e., the height of each chunk) might be different due to e.g., different bandwidth (i.e., the width of each chunk) or congestion situation of the path(s).

The second portion of the data to be transferred may be divided or partitioned into a number of data chunks (380A, 380B, 380C, 380D, etc.), e.g., based on the number of available or usable paths (e.g., as established per the description of FIG. 2). In an example embodiment, the sizes of the data chunks (380A, 380B, 380C, 380D, etc.) may be determined based on, e.g., the communication characteristics of each available or usable path (and/or the completion time of each chunk of the first portion of data) in order to complete the transmissions of the chunks through the multiple usable paths at (substantially) the same time. As shown in the right side of FIG. 3B, the transmission completion time for the data chunks (380A, 380B, 380C, 380D, etc.) may be the same or substantially the same. It is to be understood that the processes of those for the second portion of data may be repeated until all portions of data to be transferred finish transmission.

It is to be understood that during the transmission of data chunk, modification of chunk (e.g., modify the size and/or address of the chunk, etc.) may not be allowed. Data to be transferred may be divided into one, two, or more portions, each portion may be divided or partitioned into a number of chunks corresponding to the number of available/usable paths. When or after the data chunks of the first data portion are transmitted, based on the communication characteristics of each available/usable path (and/or the completion time of each chunk of the previous portion of data, if any), including the remaining un-transmitted packets for each path if any, the sizes for the data chunk of the second/next data portion may be determined or re-determined. Features in the embodiments disclosed herein may help to reduce the long-tail latency of the available/usable paths, so that all data chunks of each data portion (and/or all portions of the data) may complete transmission at the same or substantially the same time. It is also to be understood that the data chunk partition/division process may be done by either software or hardware (e.g., NIC, FPGA of the NIC, etc.).

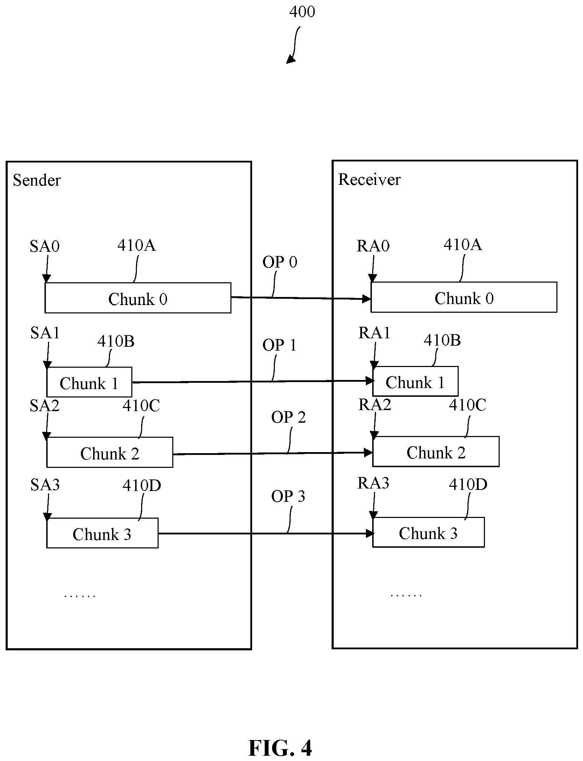

FIG. 4 is a schematic view of an example 400 transferring data chunks using a multi-path architecture, arranged in accordance with at least some embodiments described herein.

It is to be understood that in some applications, data may be read, written, or otherwise accessed between the Sender (e.g., the Source of FIG. 2) and the Receiver (e.g., the Destination of FIG. 2) by, e.g., defining the memory address of the data in the Sender side and the memory address of the data in the Receiver side. Such applications include e.g., remote procedure call (RPC), Remote Direct Memory Access (RDMA), etc.

It is to be understood that RPC may refer to a software communication protocol that one program can use to request a service from a program located in another computer on a network without having to understand the network's details. RPC may be used to call other processes on the remote systems like a local system. It is also to be understood that RDMA may refer to a direct memory access from the memory of one computer into that of another without involving either one's operating system.

In an example embodiment, data from the starting memory address (SAO) of the Sender can be written into (or read from or otherwise accessed between the Sender and the Receiver) the starting memory address (RAO) of the Receiver. The data may be divided into one or more portions (e.g., data portions having continuous memory addresses, where the starting memory address of the next data portion immediately follows the ending memory address of the previous data portion). Each portion may be divided or partitioned into a number of data chunks corresponding to a number of available/usable paths (which is e.g., based on the number of available source ports with a same source port prefix). The sizes of the data chunks (410A, 410B, 410C, 410D, etc.) may be determined based on, e.g., the communication characteristics of each available or usable path (and/or the completion time of each chunk of the previous portion of data, if any) in order to complete the transmissions of the data chunks (410A, 410B, 410C, 410D, etc.) through the multiple usable paths at (substantially) the same time.

As shown in FIG. 4, the staring memory address SAO of the first data chunk 410A in the Sender side may be assigned as the same as the staring memory address SAO of the data to be transferred in the Sender side. The staring memory address RAO of the first data chunk 410A in the Receiver side may be assigned as the same as the staring memory address RAO of the data to be transferred in the Receiver side.

The staring memory address SA1 of the second data chunk 410B in the Sender side may be assigned as the same as the staring memory address SAO of the data to be transferred in the Sender side, plus the size of the first data chunk 410A. The staring memory address RA1 of the second data chunk 410B in the Receiver side may be assigned as the same as the staring memory address RAO of the data to be transferred in the Receiver side, plus the size of the first data chunk 410A.

The staring memory address SA2 of the third data chunk 410C in the Sender side may be assigned as the same as the staring memory address SAO of the data to be transferred in the Sender side, plus the size of the first data chunk 410A and the size of the second data chunk 410B. The staring memory address RA2 of the third data chunk 410C in the Receiver side may be assigned as the same as the staring memory address RAO of the data to be transferred in the Receiver side, plus the size of the first data chunk 410A and the size of the second data chunk 410B.

The staring memory address SA3 of the fourth data chunk 410D in the Sender side may be assigned as the same as the staring memory address SAO of the data to be transferred in the Sender side, plus the size of the first data chunk 410A and the size of the second data chunk 410B and the size of the third data chunk 410C. The staring memory address RA3 of the fourth data chunk 410D in the Receiver side may be assigned as the same as the staring memory address RAO of the data to be transferred in the Receiver side, plus the size of the first data chunk 410A and the size of the second data chunk 410B and the size of the third data chunk 410C.

By repeating the same or similar process, the starting addresses of each data chunk (410A, 410B, 410C, 410D, etc.) may be determined, along with the determined size of each data chunk (and the determined starting addresses of data portions, if any).

It is to be understood that the operations (OPO, OP1, OP2, OP3, etc.) may be read, write, or other data access operation(s), where the starting memory address in the Sender side and the starting memory address in the Receiver side may be given along with the sizes of the data chunk (e.g., as parameters, or to be communicated between the Sender and the Receiver, etc.).

It is also to be understood that for each path (and for all paths), features in the embodiments disclosed herein may address (or eliminate) the out-of-order delivery issues. It is further to be understood that after all data chunks (e.g., of the last portion of the data to be transferred) are transmitted, the multi-path algorithm or protocol may notify the upper layer (e.g., the application layer in the computer network system) that the data transmission is completed e.g., by sending work completion messages to the upper layer. That is, for the upper layer, there is only one memory transfer task, but the multi-path algorithm or protocol described herein may divide the single task into multiple individual and independent data/chunk transfer tasks (e.g., via the established multiple paths). That is, operation/transmission of each data chunk may be considered as an independent. It is to be understood that the Sender and/or the Receiver may follow or be communicated with the same data transfer protocol (e.g., the multi-path algorithm or protocol described herein).

It is further to be understood that each data chunk may be transferred via a path of multi-path, and thus the data of the data chunk is in order and may be written in the memory address in the Receiver side. The hardware may not need to buffer the received data chunk since the data chunk may be written into the memory in the Receiver side when the Receiver receiving the data packets of the data chunk. When all data chunks (of all data portions) are received or written in the Receiver side, the hardware may notify (e.g., sending a message to) the upper layer (e.g., application layer) indicating that the receiving is complete. The multi-path establishing/selection and the data chunk partition may be transparent or invisible to the application layer.

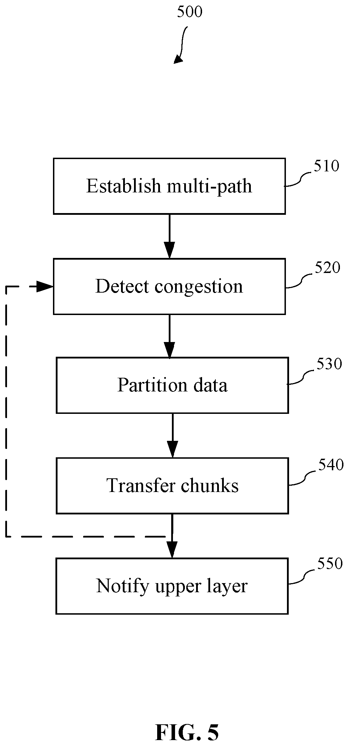

FIG. 5 is a flow chart illustrating an example processing flow 500 of multi-path data transferring in a computer network system, in accordance with at least some embodiments described herein.

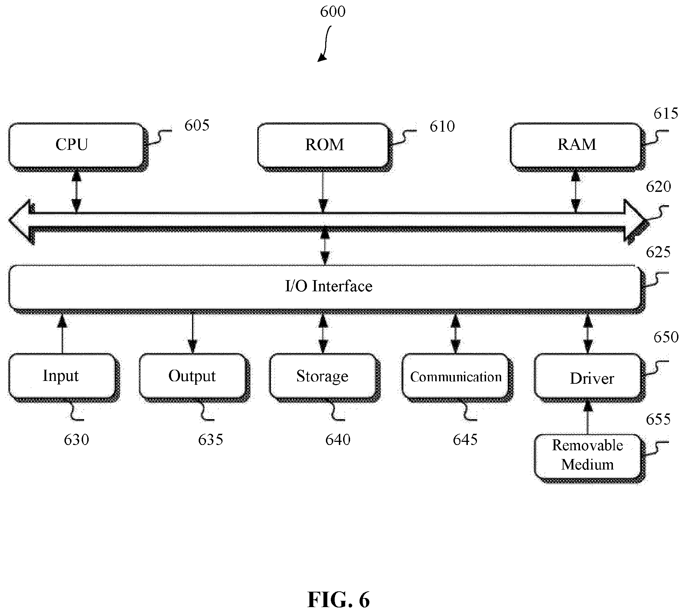

It is to be understood that the processing flow 500 disclosed herein can be conducted by one or more processors including e.g., the processor of one or more of the device 105, 110, 115, 120, 130, 140, 150, 170, 180, and/or 190 of FIG. 1, the CPU 605 of FIG. 6, and/or any other suitable processor, unless otherwise specified.

It is also to be understood that the processing flow 500 can include one or more operations, actions, or functions as illustrated by one or more of blocks 510, 520, 530, 540, and 550. These various operations, functions, or actions may, for example, correspond to software, program code, or program instructions executable by a processor that causes the functions to be performed. Although illustrated as discrete blocks, obvious modifications may be made, e.g., two or more of the blocks may be re-ordered; further blocks may be added; and various blocks may be divided into additional blocks, combined into fewer blocks, or eliminated, depending on the desired implementation. It is to be understood that before the processing flow 500, operations including initializations or the like may be performed. For example, system parameters and/or application parameters may be initialized. It is to be understood that the processes, operations, or actions described in FIGS. 2, 3A, 3B, and 4 may be implemented or performed by the processor. Processing flow 500 may begin at block 510.

At block 510 (Establish multi-path), the processor may establish multiple paths for a connection/link based on, e.g., fixing the source and destination Internet Protocol (IP) addresses and/or the destination port, and changing the source port(s) or assigning different source port(s) to the data (e.g. chunks, packets, etc.) to be transferred. The processor may change or assign or select the source port(s) with a same predetermined source port prefix for a connection/link. Processing may proceed from block 510 to block 520.

At block 520 (Detect congestion), the processor may (optionally) monitor, check, probe, and/or poll each path's communication characteristics (e.g., speed, bandwidth, congestion window, etc.) by using various congestion control mechanisms such as sending the RTT messages and checking the RTT results, etc. It is to be understood that the processor may determine the usable paths among the available paths based on the determined communication characteristics. For example, if a path fails (e.g., losing packet(s) for a predetermined period of time), the processor may determine that such path may not be usable, the processor may determine switch to or select another path. It is also to be understood that the processor may periodically or continuously perform the steps of block 520 during the transmission of the data (see the description of block 540). Processing may proceed from block 520 to block 530.

At block 530 (Partition data), the processor may (optionally) divide the data to be transferred into one or more portions, depending on e.g., the size of the data, the communication characteristics of the paths (or the connection/link), etc. The processor may divide or partition each data portion into a number of data chunks based on e.g., the number of available paths determined in block 510 or the number of usable paths determined in block 520. The processor may also determine the sizes of the data chunks, based on, e.g., the communication characteristics of each available or usable path (and/or the completion time of each chunk of the previous portion of data, if any) in order to complete the transmissions of the data chunks through the multiple available or usable paths at (substantially) the same time. The processor may further determine the starting memory address (for the sender side and/or for the receiver side) of each data chunk. Processing may proceed from block 530 to block 540.

At block 540 (Transfer chunks), the processor may perform data transferring of each data chunk e.g., by sending each data chunk to the sending queue for each corresponding path with e.g., the memory address information. It is to be understood that the processor may periodically or continuously perform the steps of block 520 during the transmission of the data. If there are remaining data portion(s), processing may proceed from block 540 to block 520 (or to block 530 since the process of block 520 is periodically or continuously performed). If there is remaining data portion and all data portions are transmitted, processing may proceed from block 540 to block 550.

At block 550 (Notify upper layer), the processor may notify the upper layer (e.g., the application layer in the computer network system) that the data transmission is completed e.g., by sending work completion messages to the upper layer.

Features in the embodiments disclosed herein (e.g., the multi-path algorithm or protocol) may be implemented in software. In such scheme, the software may perform chunk partitioning (e.g., a size of 4KB, etc.), determine the memory addresses (e.g., in the sender side or the receiver side) for each data chunk, and distribute the data chunks across multiple paths using e.g., round-robin load balancing mechanism or based on load balancing configuration to multiple queue pairs in the hardware (e.g., NIC or FPGA of the NIC). In such scheme, the hardware may not be aware of the multi-path, and may treat each path as a connection/link.

Features in the embodiments disclosed herein (e.g., the multi-path algorithm or protocol) may be implemented in hardware (e.g., NIC or FPGA of the NIC). In such scheme, each connection may have e.g., a fixed number of paths (e.g., 4 paths, etc.), corresponding to the number of available queue pairs. The software may initialize the configuration of the queue pairs within a connection. The hardware may partition the data chunks based on e.g., the communication characteristics of the paths in a connection. The hardware may consider the first data chunks (e.g., except the last data chunk) as multiples of MTU (maximum transmission unit) and determine the starting memory address for each chunk. It is to be understood that each path's corresponding queue pair may transmit its corresponding data chunk. Each queue pair may segment data chunk based on e.g., the MTU and then send data packets. Each path has its own congestion control engine, and data transmission on each path may be similar to the data transmission of a single-path transmission.

Features in the embodiments disclosed herein may eliminate the out-of-order processing between the multiple paths, to eliminate the out-of-order issues caused by e.g., the limited buffer size of the hardware for re-ordering or combining the out-of-order data. When an issue arises on a path (e.g., failure, heavily congested, etc.), the issue may be sensed or detected by the software. By modifying the source port in the queue pair context, a new path may be established, configured, or generated. It is to be understood that the work completion (message) may only be submitted to the upper layer after all data chunks (for all data portions) are received at the receiver side.

Features in the embodiments disclosed herein may configure whether the hardware needs to perform multi-path data distribution. If multi-path data distribution is not needed, the hardware may revert to single-path and/or primary-backup path transmission. The hardware may need to determine the sizes of the data chunks, and the load balancing needs to be determined during data chunk partitioning, so that all data chunks may complete transmission through the multiple available or usable paths at (substantially) the same time. Features in the embodiments disclosed herein may dynamically adjust the partition size (i.e., the sizes of the data chunks) for each path based on e.g., the detected communication characteristics of each path (and/or the completion time of data chunks of previous data portion, if any).

FIG. 6 is a schematic structural diagram of an example computer system 600 applicable to implementing an electronic device (for example, the server, one of the terminal devices, the switch(s), and/or the router(s) shown in FIG. 1), arranged in accordance with at least some embodiments described herein. It is to be understood that the computer system shown in FIG. 6 is provided for illustration only instead of limiting the functions and applications of the embodiments described herein.

As depicted, the computer system 600 may include a central processing unit (CPU) 605. The CPU 605 may perform various operations and processing based on programs stored in a read-only memory (ROM) 610 or programs loaded from a storage device 640 to a random-access memory (RAM) 615. The RAM 615 may also store various data and programs required for operations of the system 600. The CPU 605, the ROM 610, and the RAM 615 may be connected to each other via a bus 620. An input/output (I/O) interface 625 may also be connected to the bus 620.

The components connected to the I/O interface 625 may further include an input device 630 including a keyboard, a mouse, a digital pen, a drawing pad, or the like; an output device 635 including a display such as a liquid crystal display (LCD), a speaker, or the like; a storage device 640 including a hard disk or the like; and a communication device 645 including a network interface card such as a LAN card, a modem, or the like. The communication device 645 may perform communication processing via a network such as the Internet, a WAN, a LAN, a LIN, a cloud, etc. In an embodiment, a driver 650 may also be connected to the I/O interface 625. A removable medium 655 such as a magnetic disk, an optical disk, a magneto-optical disk, a semiconductor memory, or the like may be mounted on the driver 650 as desired, such that a computer program read from the removable medium 655 may be installed in the storage device 640.

It is to be understood that the processes described with reference to the flowchart of FIG. 5 and/or the processes described in other figures may be implemented as computer software programs or in hardware. The computer program product may include a computer program stored in a computer readable non-volatile medium. The computer program includes program codes for performing the method shown in the flowcharts and/or GUIs. In this embodiment, the computer program may be downloaded and installed from the network via the communication device 645, and/or may be installed from the removable medium 655. The computer program, when being executed by the central processing unit (CPU) 605, can implement the above functions specified in the method in the embodiments disclosed herein.

It is to be understood that the disclosed and other solutions, examples, embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., a field programmable gate array, an application specific integrated circuit, or the like.

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., erasable programmable read-only memory, electrically erasable programmable read-only memory, and flash memory devices; magnetic disks, e.g., internal hard disks or removable disks; magneto optical disks; and compact disc read-only memory and digital video disc read-only memory disks. The processor and the memory can be supplemented by, or incorporated in, special purpose logic circuitry.

It is to be understood that different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by both this disclosure. It is indeed intended that the scope of this disclosure should be determined by a proper legal interpretation and construction of the disclosure, including equivalents, as understood by those of skill in the art relying upon the complete disclosure present at the time of filing.

### Aspects:

It is appreciated that any one of aspects can be combined with each other.

Aspect 1. A method for multi-path data transferring in a computer network, the method comprising: establishing multiple paths in a connection by assigning a plurality of source ports and fixing a source Internet Protocol (IP) address, a destination IP address, and/or a destination port; detecting at least one of a first congestion level and a first bandwidth of each path of the multiple paths; partitioning a first data into multiple chunks, a number of the multiple chunks of the first data corresponding to a number of the multiple paths, a size of each chunk of the multiple chunks of the first data being determined based on the detected at least one of the first congestion level and the first bandwidth of each path of the multiple paths; and respectively transferring the multiple chunks of the first data via the multiple paths.

Aspect 2. The method of aspect 1, wherein a number of each source port of the plurality of source ports for the connection has a same prefix and a remaining number different from each other.

Aspect 3. The method of aspect 1 or aspect 2, further comprising: determining source addresses and destination addresses of the multiple chunks of the first data based on a source address and a destination address of first data and the determined size of each chunk of the multiple chunks of the first data.

Aspect 4. The method of any one of aspects 1-3, further comprising: detecting at least one of a second congestion level and a second bandwidth of each path of the multiple paths; partitioning a second data into multiple chunks, a number of the multiple chunks of the second data being corresponding to the number of the multiple paths, a size of each chunk of the multiple chunks of the second data being determined based on the detected at least one of the second congestion level and the second bandwidth of each path of the multiple paths; and respectively transferring the multiple chunks of the second data via the multiple paths.

Aspect 5. The method of aspect 4, further comprising: a receiving end receiving the multiple chunks of the second data at the destination port at a substantially same time; and the receiving end notifying an application layer of the computer network upon receiving all of the multiple chunks of the first data and the multiple chunks of the second data from a sending end.

Aspect 6. The method of any one of aspects 1-5, wherein the establishing of the multiple paths and the partitioning of the first data into multiple chunks are performed by running an algorithm of the computer network.

Aspect 7. The method of any one of aspects 1-6, wherein the establishing of the multiple paths and the partitioning of the first data into multiple chunks are performed via a network interface card or a field programmable gate array of the computer network.

Aspect 8. The method of any one of aspects 1-7, further comprising: switching from a first path of the multiple paths to a second path of the multiple paths when a failure occurs in the first path, wherein the first path corresponds to a first source port of the plurality of source ports, and the second path corresponds to a second source port of the plurality of source ports.

Aspect 9. A computer network system for multi-path data transferring, the system comprising: a memory to store a first data; a processor to: establish multiple paths in a connection by assigning a plurality of source ports and fixing a source Internet Protocol (IP) address, a destination IP address, and/or a destination port; detect at least one of a first congestion level and a first bandwidth of each path of the multiple paths; partition the first data into multiple chunks, a number of the multiple chunks of the first data corresponding to a number of the multiple paths, a size of each chunk of the multiple chunks of the first data being determined based on the detected at least one of the first congestion level and the first bandwidth of each path of the multiple paths; and respectively transfer the multiple chunks of the first data via the multiple paths.

Aspect 10. The system of aspect 9, wherein a number of each source port of the plurality of source ports for the connection has a same prefix and a remaining number different from each other.

Aspect 11. The system of aspect 9 or aspect 10, wherein the processor is to further: determine source addresses and destination addresses of the multiple chunks of the first data based on a source address and a destination address of first data and the determined size of each chunk of the multiple chunks of the first data.

Aspect 12. The system of any one of aspects 9-11, wherein the processor is to further: detect at least one of a second congestion level and a second bandwidth of each path of the multiple paths; partition a second data into multiple chunks, a number of the multiple chunks of the second data corresponding to the number of the multiple paths, a size of each chunk of the multiple chunks of the second data being determined based on the detected at least one of the second congestion level and the second bandwidth of each path of the multiple paths; and respectively transfer the multiple chunks of the second data via the multiple paths.

Aspect 13. The system of aspect 12, wherein the processor is to further: receive the multiple chunks of the second data at the destination port at a substantially same time; and notify an application layer of the computer network upon receiving all of the multiple chunks of the first data and the multiple chunks of the second data.

Aspect 14. The system of any one of aspects 9-13, wherein the processor is to further: switch from a first path of the multiple paths to a second path of the multiple paths when a failure occurs in the first path, wherein the first path corresponds to a first source port of the plurality of source ports, and the second path corresponds to a second source port of the plurality of source ports.

Aspect 15. A non-transitory computer-readable medium having computer-executable instructions stored thereon that, upon execution, cause one or more processors to perform operations comprising: establishing multiple paths in a connection by assigning a plurality of source ports and fixing a source Internet Protocol (IP) address, a destination IP address, and/or a destination port; detecting at least one of a first congestion level and a first bandwidth of each path of the multiple paths; partitioning a first data into multiple chunks, a number of the multiple chunks of the first data corresponding to a number of the multiple paths, a size of each chunk of the multiple chunks of the first data being determined based on the detected at least one of the first congestion level and the first bandwidth of each path of the multiple paths; and respectively transferring the multiple chunks of the first data via the multiple paths.

Aspect 16. The computer-readable medium of aspect 15, wherein a number of each source port of the plurality of source ports for the connection has a same prefix and a remaining number different from each other.

Aspect 17. The computer-readable medium of aspect 15 or aspect 16, the operations further comprise: determining source addresses and destination addresses of the multiple chunks of the first data based on a source address and a destination address of first data and the determined size of each chunk of the multiple chunks of the first data.

Aspect 18. The computer-readable medium of any one of aspects 15-17, the operations further comprise: detecting at least one of a second congestion level and a second bandwidth of each path of the multiple paths; partitioning a second data into multiple chunks, a number of the multiple chunks of the second data corresponding to the number of the multiple paths, a size of each chunk of the multiple chunks of the second data being determined based on the detected at least one of the second congestion level and the second bandwidth of each path of the multiple paths; and respectively transferring the multiple chunks of the second data via the multiple paths.

Aspect 19. The computer-readable medium of aspect 18, the operations further comprise: receiving the multiple chunks of the second data at the destination port at a substantially same time, and notifying an application layer of the computer network upon receiving all of the multiple chunks of the first data and the multiple chunks of the second data.

Aspect 20. The computer-readable medium of any one of aspects 15-19, the operations further comprise: switching from a first path of the multiple paths to a second path of the multiple paths when a failure occurs in the first path, wherein the first path corresponds to a first source port of the plurality of source ports, and the second path corresponds to a second source port of the plurality of source ports.

The terminology used in this specification is intended to describe particular embodiments and is not intended to be limiting. The terms "a," "an," and "the" include the plural forms as well, unless clearly indicated otherwise. The terms "comprises" and/or "comprising," when used in this specification, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present disclosure. This specification and the embodiments described are exemplary only, with the true scope and spirit of the disclosure being indicated by the claims that follow.

## Claims

1. A method for multi-path data transferring in a computer network, the method comprising:
establishing (510) multiple paths in a connection by assigning a plurality of source ports and fixing a source Internet Protocol (IP) address, a destination IP address, and a destination port;
detecting (520) at least one of a first congestion level and a first bandwidth of each path of the multiple paths;
partitioning (530) a first data into multiple chunks, a number of the multiple chunks of the first data corresponding to a number of the multiple paths, a size of each chunk of the multiple chunks of the first data being determined based on the detected at least one of the first congestion level and the first bandwidth of each path of the multiple paths; and
respectively transferring (540) the multiple chunks of the first data via the multiple paths.

2. The method of claim 1, wherein a number of each source port of the plurality of source ports for the connection has a same prefix and a remaining number different from each other.

3. The method of claim 1, further comprising:
determining source addresses and destination addresses of the multiple chunks of the first data based on a source address and a destination address of first data and the determined size of each chunk of the multiple chunks of the first data.

4. The method of claim 1, further comprising:
detecting at least one of a second congestion level and a second bandwidth of each path of the multiple paths;
partitioning a second data into multiple chunks, a number of the multiple chunks of the second data corresponding to the number of the multiple paths, a size of each chunk of the multiple chunks of the second data being determined based on the detected at least one of the second congestion level and the second bandwidth of each path of the multiple paths; and
respectively transferring the multiple chunks of the second data via the multiple paths.

5. The method of claim 4, further comprising:
a receiving end receiving the multiple chunks of the second data at the destination port at a substantially same time; and
the receiving end notifying an application layer of the computer network upon receiving all of the multiple chunks of the first data and the multiple chunks of the second data from a sending end.

6. The method of claim 1, wherein the establishing of the multiple paths and the partitioning of the first data into multiple chunks are performed by running an algorithm of the computer network.

7. The method of claim 1, wherein the establishing of the multiple paths and the partitioning of the first data into multiple chunks are performed via a network interface card or a field programmable gate array of the computer network.

8. The method of claim 1, further comprising:
switching from a first path of the multiple paths to a second path of the multiple paths when a failure occurs in the first path,
wherein the first path corresponds to a first source port of the plurality of source ports, and the second path corresponds to a second source port of the plurality of source ports.

9. A computer network system for multi-path data transferring, the system comprising:
a memory to store a first data;
a processor, configured to perform the method according to any of claims 1-8.

10. A non-transitory computer-readable medium having computer-executable instructions stored thereon that, upon execution, cause one or more processors to perform operations comprising:
establishing (510) multiple paths in a connection by assigning a plurality of source ports and fixing a source Internet Protocol (IP) address, a destination IP address, and a destination port;
detecting (520) at least one of a first congestion level and a first bandwidth of each path of the multiple paths;
partitioning (530) a first data into multiple chunks, a number of the multiple chunks of the first data corresponding to a number of the multiple paths, a size of each chunk of the multiple chunks of the first data being determined based on the detected at least one of the first congestion level and the first bandwidth of each path of the multiple paths; and
respectively transferring (540) the multiple chunks of the first data via the multiple paths.

11. The computer-readable medium of claim 10, wherein a number of each source port of the plurality of source ports for the connection has a same prefix and a remaining number different from each other.

12. The computer-readable medium of claim 10, the operations further comprise:
determining source addresses and destination addresses of the multiple chunks of the first data based on a source address and a destination address of first data and the determined size of each chunk of the multiple chunks of the first data.

13. The computer-readable medium of claim 10, the operations further comprise:
detecting at least one of a second congestion level and a second bandwidth of each path of the multiple paths;
partitioning a second data into multiple chunks, a number of the multiple chunks of the second data corresponding to the number of the multiple paths, a size of each chunk of the multiple chunks of the second data being determined based on the detected at least one of the second congestion level and the second bandwidth of each path of the multiple paths; and
respectively transferring the multiple chunks of the second data via the multiple paths.

14. The computer-readable medium of claim 13, the operations further comprise:
receiving the multiple chunks of the second data at the destination port at a substantially same time, and
notifying an application layer of the computer network upon receiving all of the multiple chunks of the first data and the multiple chunks of the second data.

15. The computer-readable medium of claim 10, the operations further comprise:
switching from a first path of the multiple paths to a second path of the multiple paths when a failure occurs in the first path,
wherein the first path corresponds to a first source port of the plurality of source ports, and the second path corresponds to a second source port of the plurality of source ports.
